# EUROPEAN PATENT APPLICATION

(11) **EP 3 993 146 A1**
(43) Date of publication of application: **04.05.2022**
(21) Application number: 20833153.8
(22) Date of filing: 20.04.2020
(51) Int. Cl.: H01M 50/20

(54) **POWER SUPPLY DEVICE, AND ELECTRIC VEHICLE AND POWER STORAGE DEVICE COMPRISING POWER SUPPLY DEVICE**

(30) Priority: 28.06.2019 JP 2019122218
(71) Applicant: SANYO Electric Co., Ltd., Daito-shi Osaka 574-8534 (JP)
(72) Inventor: KOGAMI, Nao, Osaka 540-6207 (JP); TAKAHASHI, Hiroyuki, Osaka 540-6207 (JP)
(74) Representative: Vigand, Philippe
(86) International application number: PCT/JP2020/016992
(87) International publication number: WO 2020/261729

(57) **Abstract**

In order to prevent damage to an opening of a battery cell while expansion of the battery cell is absorbed by a separator, a power supply device includes a battery block in which a plurality of battery cells (1) is stacked in a thickness with separator (2) interposed therebetween, a pair of end plates disposed on opposing end faces of the battery block, and a binding bar coupled to the pair of end plates and fixing the battery block in a compressed state via the end plates. In battery cell (1), sealing plate (12) is airtightly fixed to an opening edge of a battery case whose bottom is closed. Separator (2) has elasticity that absorbs expansion of battery cell (1) caused by an increase in internal pressure due to deformation of stack plane (2A) stacked on facing plane (11A) of a battery case in a surface contact state, and has a Young's modulus of an outer peripheral edge part and upper edge part (2a) of stack plane (2A) higher than a Young's modulus of internal region (2b) located inside the outer peripheral edge part.

## Description

### TECHNICAL FIELD

The present invention relates to a power supply device in which a plurality of battery cells is stacked, an electric vehicle that includes such a power supply device, and a power storage device.

### BACKGROUND ART

A power supply device in which a large number of battery cells is stacked is suitable as a power supply that is mounted on an electric vehicle and supplies electric power to a motor that drives the vehicle, a power supply that is charged with natural energy such as a solar cell or late-night power, and a backup power supply for power failure. In the power supply device having this structure, the separator is interposed between the stacked battery cells. The separator insulates heat conduction between the battery cells and suppresses induction of thermal runaway of the battery cells. The thermal runaway of the battery cell occurs due to an internal short circuit caused by a short circuit between the positive electrode and the negative electrode inside, erroneous handling, or the like. Since a large amount of heat is generated when thermal runaway of the battery cell occurs, thermal runaway is induced in the adjacent battery cell when the heat insulating property of the separator is not sufficient. When thermal runaway of the battery cell is induced, the entire power supply device releases extremely large heat energy, and the safety as a device is impaired. In order to prevent this adverse effect, a power supply device in which a separator having excellent heat insulation characteristics is interposed between battery cells has been developed. (See PTL 1).

### Citation List

### Patent Literature

PTL 1: Unexamined Japanese Patent Publication No. 2018-204708

### SUMMARY OF THE INVENTION

### Technical problem

In a power supply device in which a large number of batteries are stacked with a separator interposed therebetween, it is also important to dispose respective battery cells stacked with the separator interposed therebetween at a fixed position to prevent positional misalignment, in addition to insulating the battery cells with the separator. In the power supply device, expansion and contraction, and vibration and impact of the battery cell also cause positional misalignment. The relative positional misalignment of the battery cells in the use state causes damage to the connection part of the metal sheet fixed to the electrode terminal of the adjacent battery cell with the bus bar, damage to the bus bar itself, or adverse effects such as malfunction due to vibration.

In order to prevent positional misalignment of the battery cells, the power supply device fixes the stacked battery cells in a compressed state. In this power supply device, a pair of end plates is disposed on opposing end faces of a battery block in which a large number of battery cells is stacked, and the pair of end plates is fixed by the binding bar. The binding bar and the end plate hold the battery cell in a compressed state with considerably strong pressure to prevent malfunction due to relative movement and vibration of the battery cell. In this power supply device, for example, in a device in which an area of a separator interposed between battery cells is about 100 square centimeters, an end plate is pressed with a strong force of several tons and fixed by a binding bar. In the power supply device having this structure, when the internal pressure increases and the battery cell expands, the end plate is pressed to increase the internal stress of the binding bar and the end plate. Since the binding bar is fixed to the end plate in a state where a strong tensile force acts and fixes the battery cell in a compressed state, when the battery cell expands due to an increase in internal pressure, a stronger tensile force acts. When the binding bar extends in this state, the battery cells are misaligned, so that it is necessary to use a tough metal sheet or the like that withstands extremely strong tensile force for the binding bar, and the binding bar becomes thick and heavy.

The above adverse effects can be suppressed by using an elastic separator that absorbs expansion of the battery cell. However, in this power supply device, an increase in tensile force of the binding bar due to expansion of the battery cell can be suppressed, but damage due to fatigue of the battery cell over time increases. The battery cells are severely damaged in a region of the sealing plate that airtightly closes the opening of the battery case.

The present invention has been developed for the purpose of further solving the above disadvantages, and an object of the present invention is to provide a technique capable of preventing damage to an opening of a battery cell by absorbing expansion of the battery cell with a separator.

### Solution to problem

A power supply device according to an aspect of the present invention includes battery block 10 in which a plurality of battery cells 1 is stacked in a thickness direction with separator 2 interposed therebetween, a pair of end plates 3 disposed on opposing end faces of battery block 10, and binding bar 4 coupled to the pair of end plates 3 and fixing battery block 10 in a compressed state via end plates 3. In battery cell 1, sealing plate 12 is airtightly fixed to an opening edge of battery case 11 whose bottom is closed. Separator 2 has stack plane 2A stacked on facing plane 11A of battery case 11 in a surface contact state. Stack plane 2A has elasticity that absorbs expansion due to an increase in internal pressure of battery cell 1, and the Young's modulus of an outer peripheral edge part and upper edge part 2a of stack plane 2A is different from the Young's modulus of an internal region 2b located inside the outer peripheral edge part, and the Young's modulus of upper edge part 2a is made higher than that of internal region 2b.

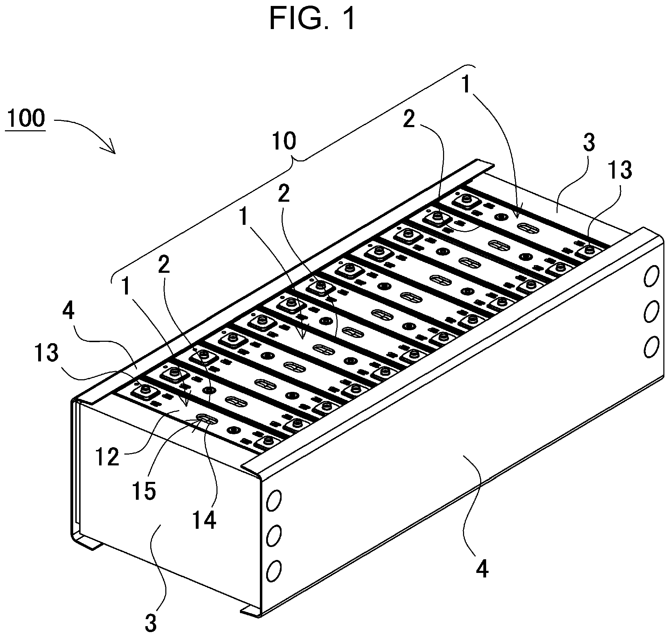

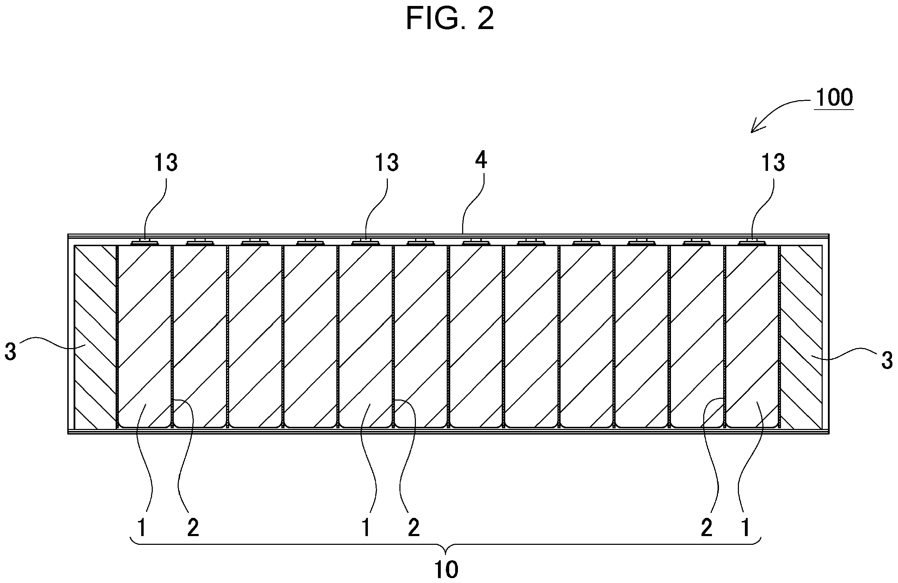

In the present specification, the "upper edge part" of the separator is specified in the drawings. In the power supply device illustrated in FIGS. 1 and 2, since the battery cells are stacked in a posture in which the sealing plate is disposed on the battery cell, the "upper edge part" of the separator is an outer peripheral edge along the sealing plate of the battery cell. Therefore, in the present specification, the upper edge part of the separator means an outer peripheral edge along the sealing plate of the battery cell.

An electric vehicle according to an aspect of the present invention includes power supply device 100 described above, traction motor 93 that receives electric power from power supply device 100, vehicle body 91 that incorporates power supply device 100 and motor 93, and wheel 97 that is driven by motor 93 to let vehicle body 91 travel.

A power storage device according to an aspect of the present invention includes power supply device 100 described above and power supply controller 88 configured to control charging and discharging of power supply device 100. Power supply controller 88 enables charging of secondary battery cells 1 with electric power supplied from an outside and causes secondary battery cells 1 to charge.

### Advantageous effect of invention

The power supply device described above can effectively prevent the damage of the opening of the battery cell while absorbing the expansion of the battery cell by the separator.

### BRIEF DESCRIPTION OF DRAWINGS

FIG. 1 is a perspective view of a power supply device according to an exemplary embodiment of the present invention.
FIG. 2 is a vertical sectional view of the power supply device illustrated in FIG. 1.
FIG. 3 is a horizontal sectional view of the power supply device illustrated in FIG. 1.
FIG. 4 is an exploded perspective view of a separator and a battery cell.
FIG. 5 is an enlarged sectional view illustrating another example of the separator.
FIG. 6 is an enlarged sectional view illustrating another example of the separator.
FIG. 7 is a perspective view illustrating another example of the separator.
FIG. 8 is a sectional view of the separator illustrated in FIG. 7 taken along line VIII-VIII.
FIG. 9 is a vertical sectional view illustrating another example of the separator.
FIG. 10 is a vertical sectional view illustrating another example of the separator.
FIG. 11 is a partially enlarged perspective view illustrating another example of the separator.
FIG. 12 is a partially enlarged perspective view illustrating another example of the separator.
FIG. 13 is a block diagram illustrating an example in which a power supply device is mounted on a hybrid vehicle that runs on an engine and a motor.
FIG. 14 is a block diagram illustrating an example in which a power supply device is mounted on an electric car that runs only on a motor.
FIG. 15 is a block diagram illustrating an example applied to a power supply device for power storage.

### DESCRIPTION OF EMBODIMENTS

Hereinafter, the present invention will be described in detail with reference to the drawings. In the following description, terms (for example, "top", "bottom", and other terms including those terms) indicating specific directions or positions are used as necessary. However, the use of those terms is for facilitating the understanding of the invention with reference to the drawings, and the technical scope of the present invention is not limited by the meanings of the terms. Parts denoted by the same reference numerals in a plurality of drawings indicate the identical or equivalent parts or members.

Further, the following exemplary embodiment illustrates specific examples of the technical concept of the present invention, and does not limit the present invention to the following exemplary embodiment. In addition, unless otherwise specified, dimensions, materials, shapes, relative arrangements, and the like of the components described below are not intended to limit the scope of the present invention, but are intended to be illustrative. The contents described in one exemplary embodiment and one example are also applicable to other exemplary embodiments and examples. In addition, sizes, positional relationships, and the like of members illustrated in the drawings may be exaggerated for the sake of clarity of description.

A power supply device according to the first exemplary embodiment of the present invention includes a battery block in which a plurality of battery cells is stacked in a thickness with a separator interposed therebetween, a pair of end plates disposed on opposing end faces of the battery block, and a binding bar coupled to the pair of end plates and fixing the battery block in a compressed state via the end plates. In the battery cell, a sealing plate is airtightly fixed to an opening edge of a battery case whose bottom is closed. The separator has elasticity that absorbs expansion due to an increase in internal pressure of the battery cell when a stack plane stacked on a facing plane of the battery case in a surface contact state is deformed, and the Young's modulus of an outer peripheral edge part and an upper edge part of the stack plane is different from the Young's modulus of an internal region located inside the outer peripheral edge part, and the Young's modulus of the upper edge part is made higher than that of the internal region.

In the power supply device described above, the Young's modulus of the outer peripheral edge part of the stack plane of the separator and the upper edge part along the outer peripheral edge of the sealing plate of the battery cell is increased to have high rigidity, and the Young's modulus of the internal region of the stack plane is made smaller than the Young's modulus of the upper edge part to have low rigidity. Therefore, in a state where the internal pressure of the battery cell rises and expands, the expansion of the internal region of the stack plane is absorbed by thinly deforming the low-rigidity separator while suppressing the deformation of the upper edge part. The upper edge part of the stack plane of the separator is located in a region along the outer peripheral edge of the sealing plate of the battery cell. In the battery cell, a sealing plate is airtightly fixed to a cylindrical opening whose bottom is closed by a method such as laser welding. In the battery cell having this structure, when part of an opening edge, of a cylindrical battery case, where a sealing plate is fixed is deformed due to an increase in internal pressure, fatigue increases and a failure occurs. Since the internal region of the stack plane can absorb deformation even if the central part of the battery cell is curved so as to protrude, even if the internal pressure of the battery cell is increased and deformed in an expanded state, damage of fatigue is extremely small. Therefore, the power supply device described above has a feature in which the separator can efficiently absorb expansion of the battery cell due to an increase in internal pressure, and damage due to fatigue of the upper edge part of the battery cell can be prevented.

Further, in addition to the above feature, in the power supply device, since the expansion of the battery cell is absorbed by the separator, it is possible to suppress an increase in a stress acting on the end plate and the binding bar in a state where the internal pressure increases and the battery cell expands, and to reduce the maximum stress. This is effective in reducing the thickness and weight of the end plate and the binding bar. In addition, in the power supply device described above, since the expansion of the battery cell is absorbed by the separator, it is also possible to suppress the deviation of the relative positions of respective battery cells in a state where the internal pressure of the battery cell increases and the battery cell expands. The relative positional misalignment between the adjacent battery cells causes damage to the bus bar of the metal sheet fixed to the electrode terminal of the battery cell and the electrode terminal. The power supply device capable of preventing the relative positional misalignment of a battery cell whose separator expands due to an increase in internal pressure can prevent failure of a connection part between an electrode terminal and a bus bar due to expansion of the battery cell.

Furthermore, in the power supply device described above, since the Young's modulus of the upper edge part is increased and the Young's modulus of the internal region is decreased without making the entire surface of the separator have the same Young's modulus, even if the battery cell expands in the internal region of the stack plane, the pressure rise between the battery cell and the separator is suppressed. In the battery block in which the battery cells are stacked, the pressing force acting on the entire surface of the stack plane acts on the end plate. In a power supply device capable of reducing the pressure in the internal region of the stack plane in a state where the battery cells expand, the maximum stress acting on the end plate and the bus bar can be reduced by reducing the pressing force by which the battery block presses the end plate in a state where the battery cells increase in internal pressure and expand. Further, it has a feature in which the pressing force on the entire surface on which the battery cell stresses the separator is reduced, and the battery cell can be suppressed from being misaligned due to an increase in the pressing force.

In the power supply device according to the second exemplary embodiment of the present invention, the separator is made of a hybrid material of an inorganic powder and a fibrous reinforcing material. In the power supply device according to the third exemplary embodiment of the present invention, the inorganic powder is a silica aerogel.

The separator described above is interposed between adjacent battery cells to insulate heat in the adjacent battery cells. The hybrid material suppresses induction of thermal runaway due to heating of adjacent battery cells by battery cells that have generated heat to a high temperature due to thermal runaway. Furthermore, the separator also functions as an insulating sheet that insulates the stacked battery cells.

In the power supply device according to the fourth exemplary embodiment of the present invention, the separator is made of one hybrid material. In the power supply device according to the fifth exemplary embodiment of the present invention, the packing density of the silica aerogel in the upper edge part of the hybrid material is higher than that in the internal region.

In the power supply device according to the sixth exemplary embodiment of the present invention, the separator includes a high rigidity sheet and a low rigidity sheet having a Young's modulus smaller than that of the high rigidity sheet, both the high rigidity sheet and the low rigidity sheet are made of a hybrid material of a silica aerogel and a fibrous reinforcing material, the high rigidity sheet is disposed at an upper edge part, and the low rigidity sheet is disposed in an internal region.

In the power supply device of the seventh exemplary embodiment of the present invention, the packing density of the silica aerogel of the high rigidity sheet is higher than that of the low rigidity sheet.

In a power supply device according to the eighth exemplary embodiment of the present invention, the low rigidity sheet is a laminated sheet of a hybrid material and an elastic sheet. In the power supply device according to the ninth exemplary embodiment of the present invention, the elastic sheet is a rubber elastic sheet. Furthermore, in a power supply device according to the tenth exemplary embodiment of the present invention, the rubber elastic sheet is a synthetic rubber sheet.

In the power supply device according to the eleventh exemplary embodiment of the present invention, the separator has a thickness between 0.5 mm and 3 mm, inclusive.

### (First exemplary embodiment)

Hereinafter, a more specific power supply device will be described in detail.

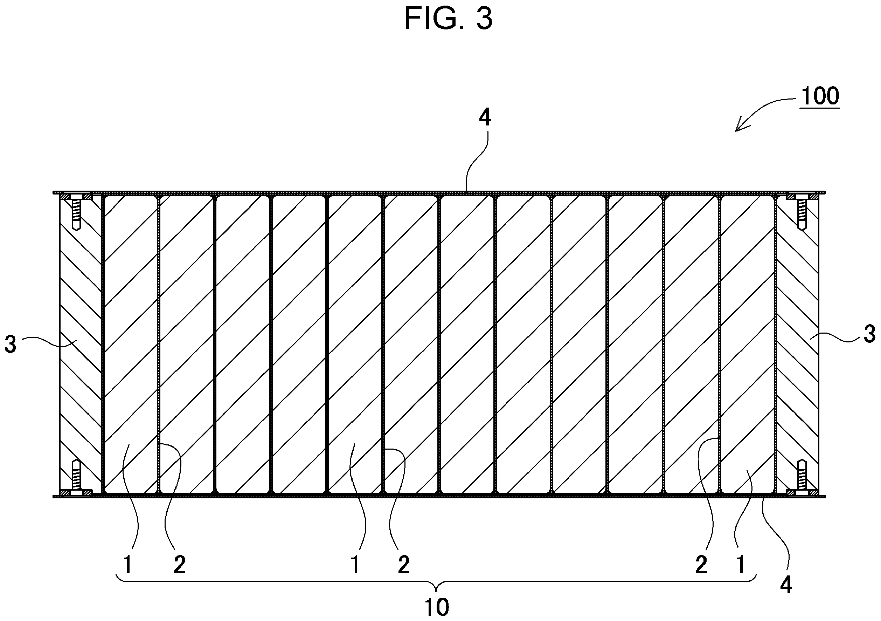

Power supply device 100 illustrated in a perspective view of FIG. 1, a vertical sectional view of FIG. 2, and a horizontal sectional view of FIG. 3 includes battery block 10 in which a plurality of battery cells 1 is stacked in a thickness with separator 2 interposed therebetween, a pair of end plates 3 disposed on opposing end faces of battery block 10, and binding bar 4 that couples the pair of end plates 3 and fixes battery block 10 in a compressed state via end plates 3.

### (Battery block 10)

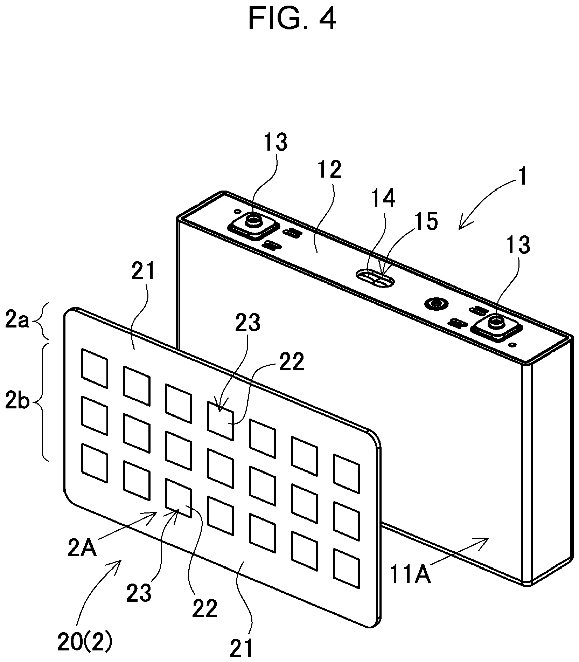

As illustrated in FIG. 4, battery cell 1 of battery block 10 is a prismatic battery cell having a quadrangular outer shape, and sealing plate 12 is laser-welded and airtightly fixed to the opening of battery case 11 whose bottom is closed, so that the inside has a sealed structure. Sealing plate 12 is provided with a pair of positive and negative electrode terminals 13 protruding from both ends. Opening 15 of safety valve 14 is provided between electrode terminals 13. Safety valve 14 opens to release internal gas when internal pressure of battery cell 1 rises to a predetermined value or more. Safety valve 14 prevents an increase in internal pressure of battery cell 1.

### (Battery cell 1)

Battery cell 1 is a lithium ion secondary battery. Power supply device 100 in which battery cell 1 is a lithium ion secondary battery has an advantage that the charge capacity with respect to the capacity and weight can be increased. However, battery cell 1 may be any other chargeable battery such as a non-aqueous electrolyte secondary battery other than the lithium ion secondary battery.

### (End plate 3, binding bar 4)

End plate 3 is a metal sheet that has an outer shape substantially equal to the outer shape of battery cell 1, and that is not deformed by being pressed by battery block 10, and is coupled to binding bar 4 at both side edges. End plates 3 couples stacked battery cells 1 in a compressed state, and binding bar 4 fixes battery block 10 in the compressed state at a predetermined pressure.

### (Separator 2)

Separator 2 is interposed between stacked battery cells 1, and stacked on facing plane 11A of battery case 11 in a surface contact state, absorbs expansion of battery cells 1 due to an increase in internal pressure, further insulates adjacent battery cells 1, and further insulates heat conduction between battery cells 1. In battery block 10, a bus bar (not shown) of a metal sheet is fixed to electrode terminals 13 of adjacent battery cells 1, and battery cells 1 are connected in series or in parallel. In battery cells 1 connected in series, since a potential difference is generated in battery case 11, battery cells 1 are insulated and stacked by separator 2. Battery cells 1 connected in parallel are stacked while thermally insulated by separator 2 in order to prevent induction of thermal runaway although no potential difference is generated in battery case 11.

The entire separator 2 is made of hybrid material 20 of an inorganic powder and a fibrous reinforcing material, or an elastic sheet is stacked on hybrid material 20. The inorganic powder is preferably a silica aerogel. In hybrid material 20, fine gaps of fibers are filled with fine silica aerogel having low thermal conductivity. The silica aerogel is carried and disposed in the gaps of the fibrous reinforcing material. The hybrid material 20 includes a fiber sheet of a fibrous reinforcing material and a silica aerogel having a nanosized porous structure, and is manufactured by impregnating fibers with a gel raw material of the silica aerogel. A fiber sheet is impregnated with a silica aerogel, then fibers are stacked, a gel raw material is reacted to form a wet gel, and the surface of the wet gel is hydrophobized and dried with hot air to produce the material. The fiber of the fiber sheet is polyethylene terephthalate (PET). However, as the fiber of the fiber sheet, inorganic fibers such as flame-retardant oxidized acrylic fibers and glass wool can also be used.

The fibrous reinforcing material preferably has a fiber diameter of 0.1 to 30 µm inclusive. The fibrous reinforcing material can improve the heat insulation characteristics of hybrid material 20 by making the fiber diameter thinner than 30 µm and reducing the heat conduction by the fiber. Silica aerogel is inorganic fine particles composed of 90% to 98% of air, and has fine pores between skeletons formed by clusters in which nano-order spherical bodies are bonded, and has a three-dimensional fine porous structure.

The hybrid material 20 of a silica aerogel and a fibrous reinforcing material is thin and exhibits excellent heat insulation characteristics. Separator 2 made of hybrid material 20 is set to have a thickness that can prevent induction of thermal runaway of battery cell 1 in consideration of energy generated by thermal runaway of battery cell 1. The energy generated by the thermal runaway of battery cell 1 increases as the charge capacity of battery cell 1 increases. Therefore, the thickness of separator 2 is set to have an optimum value in consideration of the charge capacity of battery cell 1. For example, in a power supply device including a lithium ion secondary battery having a charge capacity of 5 Ah to 20 Ah inclusive as battery cell 1, hybrid material 20 has a thickness of 0.5 mm to 3 mm, optimally about 1 mm to 2.5 mm inclusive. However, the present invention does not specify the thickness of hybrid material 20 within the above range, and the thickness of hybrid material 20 is set to an optimum value in consideration of the heat insulation characteristics of thermal runaway including the fiber sheet and the silica aerogel and the heat insulation characteristics required for preventing induction of thermal runaway of the battery cell.

The hybrid material 20 of separator 2 is a sheet that is pressed against battery cell 1 expanding due to an increase in internal pressure and is thinly deformed. Separator 2 is thinned by the pressurizing force of expanding battery cell 1, and in the state where expanded battery cell 1 is restored to the original state, the state where separator 2 is crushed is restored to the original state to absorb the expansion and contraction of battery cell 1.

The separator 2 made of one hybrid material 20 is not a hybrid material having elasticity in which the entire surface is uniformly deformed. Separator 2 of hybrid material 20 has a Young's modulus different between upper edge part 2a interposed between openings of battery cases 11 of adjacent battery cells 1 and internal region 2b of stack plane 2A of battery cells 1. The Young's modulus of upper edge part 2a along sealing plate 12 is set higher than that of internal region 2b of stack plane 2A in order to suppress deformation of the upper edge part of battery cell 1. In separator 2, upper edge part 2a has rigidity higher than that of internal region 2b, and suppresses deformation of upper edge part 2a to be smaller than that of internal region 2b in a state where battery cell 1 expands due to an increase in internal pressure.

The perspective view of FIG. 4 illustrates separator 2 in which upper edge part 2a has high rigidity and internal region 2b has low rigidity. In separator 2 in this drawing, a plurality of through holes 23 is provided in high rigidity sheet 21 having a high Young's modulus, and low rigidity sheet 22 having a low Young's modulus is disposed in through holes 23. In separator 2, the outer shape of low rigidity sheet 22 disposed in through hole 23 is made equal to the inner shape of through hole 23 of high rigidity sheet 21. In separator 2, high rigidity sheet 21 and low rigidity sheet 22 are arranged without a gap, and the entire surface can have excellent heat insulation characteristics.

The high rigidity sheet 21 has a Young's modulus higher than that of low rigidity sheet 22 so that deformation of upper edge part 2a can be suppressed in a state where it is pressurized by battery cell 1 whose internal pressure increases, and the Young's modulus of high rigidity sheet 21 is, for example, 1.5 times or more, preferably 2 times or more of that of low rigidity sheet 22.

In separator 2, in order to make the region provided with through hole 23 a low rigidity region having a small Young's modulus, through hole 23 is provided in a region excluding the outer peripheral edge part of separator 2. Since low rigidity sheet 22 is disposed in through hole 23 provided in the region excluding the outer peripheral edge part, the region excluding the outer peripheral edge part of separator 2 is a low rigidity region having a small Young's modulus. In separator 2 of FIG. 4, there is a plurality of through holes 23 in a region excluding the outer peripheral edge part, that is, inside the outer peripheral edge part, and high rigidity sheet 21 is disposed between adjacent through holes 23 and around through hole 23. Therefore, high rigidity sheet 21 and low rigidity sheet 22 are alternately mixed inside the outer peripheral edge part including internal region 2b. In separator 2, the Young's modulus of internal region 2b can be adjusted by changing the area ratio at which high rigidity sheet 21 and low rigidity sheet 22 are disposed. In separator 2, the area of low rigidity sheet 22 can be made larger than that of high rigidity sheet 21 to reduce the substantial Young's modulus of the region including internal region 2b except for the outer peripheral edge part, and conversely, the area of low rigidity sheet 22 can be made smaller than that of high rigidity sheet 21 to increase the substantial Young's modulus of the region including internal region 2b except for the outer peripheral edge part.

In separator 2 of FIG. 4, the plurality of through holes 23 is provided in the region excluding the outer peripheral edge part, so that the Young's modulus of internal region 2b is lower than that of the outer peripheral edge part including upper edge part 2a. However, in separator 2, one through hole 23 is provided in internal region 2b, and low rigidity sheet 22 is disposed in through hole 23, so that the Young's modulus of upper edge part 2a can be increased and the Young's modulus of internal region 2b can be decreased.

Since in separator 2 in which through hole 23 is provided in high rigidity sheet 21 and low rigidity sheet 22 is disposed in the through hole, high rigidity sheet 21 and low rigidity sheet 22 can be separately manufactured, there is a feature in which a large amount of high rigidity sheet 21 and low rigidity sheet 22 can be efficiently produced while significantly changing the Young's moduli of high rigidity sheet 21 and low rigidity sheet 22.

Since in separator 2 which is hybrid material 20 of a silica aerogel and a fibrous reinforcing material, the Young's modulus can be adjusted by, for example, the packing density of the silica aerogel, high rigidity sheet 21 can have a higher packing density of the silica aerogel than low rigidity sheet 22 to have a higher Young's modulus.

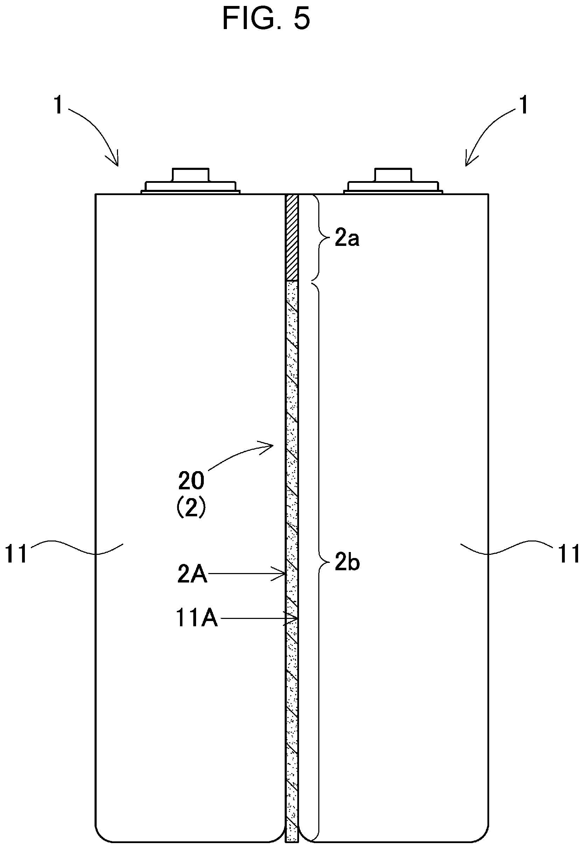

In separator 2 described above, low rigidity sheet 22 is disposed in through hole 23 of high rigidity sheet 21, so that upper edge part 2a has high rigidity and internal region 2b has low rigidity. However, as illustrated in FIG. 5, separator 2 can have upper edge part 2a having high rigidity and internal region 2b having low rigidity of one hybrid material 20. The separator 2 in which this structure is realized by hybrid material 20 of the silica aerogel and the fibrous reinforcing material can be realized by changing the packing density of the silica aerogel between upper edge part 2a and internal region 2b. The upper edge part 2a has high rigidity by increasing the packing density of the silica aerogel, and internal region 2b has low rigidity by decreasing the packing density of the silica aerogel. Since whole separator 2 is made of one hybrid material 20, separator 2 can be stacked between battery cells 1 to uniformly insulate and insulate heat across the entire surface of stack plane 11A.

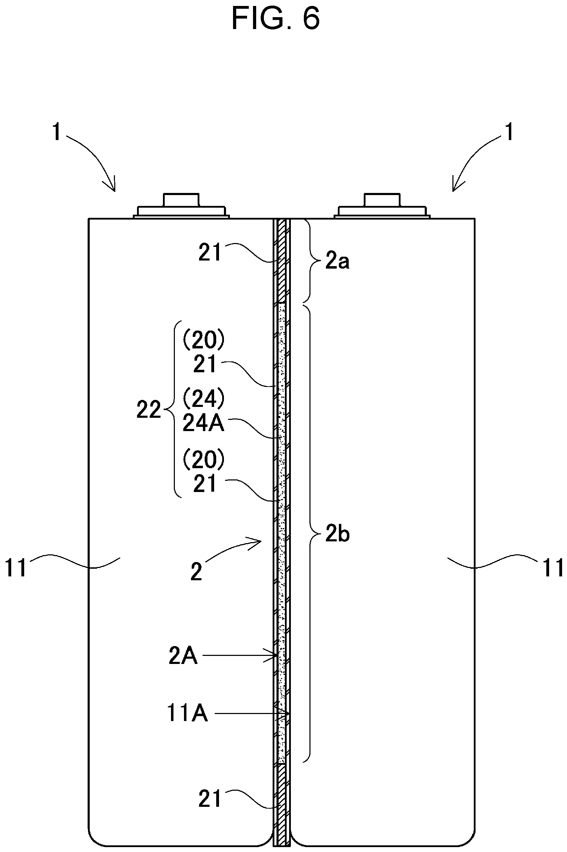

In separator 2 illustrated in the sectional view of FIG. 6, low rigidity sheet 22 in internal region 2b is a laminated sheet of hybrid material 20 and elastic sheet 24. The elastic sheet 24 has a Young's modulus smaller than that of high rigidity sheet 21, and is a sheet that is easily deformed by being pressurized by expanding battery cell 1. As elastic sheet 24, rubber elastic sheet 24A or a thermoplastic elastomer can be used. In separator 2, the surface layers on both sides are formed as high rigidity sheet 21 of hybrid material 20, frame-shaped high rigidity sheet 21 is laminated on the outer peripheral edge part of the intermediate layer, and elastic sheet 24 having the same thickness as frame-shaped high rigidity sheet 21 is laminated on the inner side of frame-shaped high rigidity sheet 21, so that entire separator 2 has the same thickness.

In power supply device 100, in order to miniaturize battery block 10 and increase a charge capacity, it is important to thin separator 2 to prevent induction of thermal runaway of battery cell 1. For this reason, elastic sheet 24 laminated on high rigidity sheet 21 has a thickness, for example, between 0.1 mm and 1 mm, inclusive, more preferably between 0.2 mm and 0.5 mm, inclusive, to absorb the expansion of internal region 2b of battery cell 1. The rubber elastic sheet 24A preferably absorbs the expansion of internal region 2b of battery cell 1 and reduces the compressive stress while being thinner than hybrid material 20.

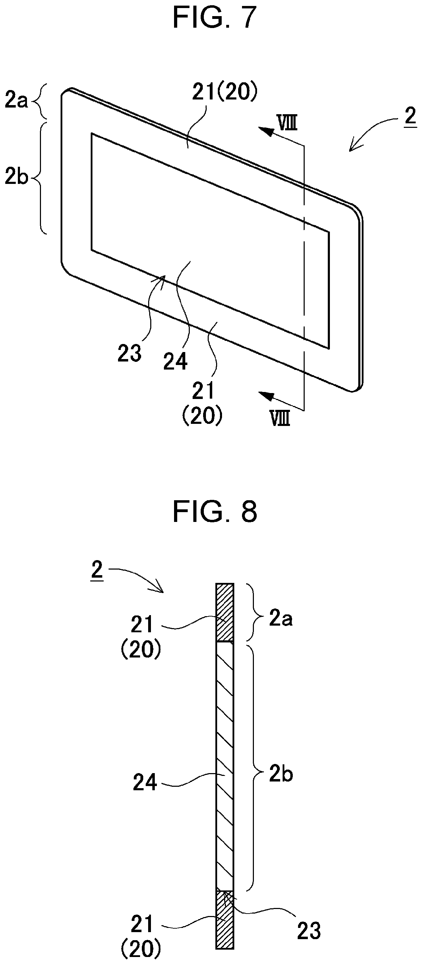

In separator 2 illustrated in the perspective view of FIG. 7 and the sectional view of FIG. 8, the outer peripheral edge part including upper edge part 2a has high rigidity, and internal region 2b which is a region inside the outer peripheral edge part has low rigidity. In separator 2 in these drawings, through hole 23 is provided in a region which is located at a central part of high rigidity sheet 21 which is hybrid material 20 and that excludes an outer peripheral edge part, and elastic sheet 24 is disposed in through hole 23 to form a low rigidity region. In separator 2, the outer shape of elastic sheet 24 disposed in through hole 23 is made equal to the inner shape of through hole 23 of high rigidity sheet 21, and the thicknesses of high rigidity sheet 21 and elastic sheet 24 are made substantially equal to each other, so that high rigidity sheet 21 and elastic sheet 24 are disposed without a gap.

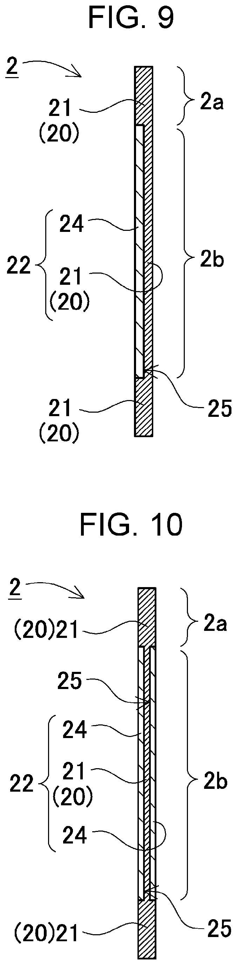

Furthermore, similarly to separator 2 illustrated in the perspective view of FIG. 7, separator 2 illustrated in the sectional views of FIGS. 9 and 10 also has the outer peripheral edge part including upper edge part 2a with high rigidity and internal region 2b, which is a region inside the outer peripheral edge part, with low rigidity, and separators 2 have internal region 2b as a laminated sheet of hybrid material 20 and elastic sheet 24. In separator 2 illustrated in the drawing, recess 25 is provided in internal region 2b that is located at a central part of high rigidity sheet 21 that is hybrid material 20 and that excludes an outer peripheral edge part, and elastic sheet 24 is disposed in recess 25 to form low rigidity sheet 22 including a laminated sheet of high rigidity sheet 21 and elastic sheet 24.

In separator 2 illustrated in FIG. 9, recess 25 is provided on one face of high rigidity sheet 21, and elastic sheet 24 is disposed in recess 25 to form low rigidity sheet 22 having a two-layer structure. In separator 2 illustrated in FIG. 10, recesses 25 are provided on both faces of high rigidity sheet 21, and elastic sheet 24 is disposed in recesses 25 to form low rigidity sheet 22 having a three-layer structure. In separators 2 illustrated in these drawings, the outer shape of elastic sheet 24 disposed in recess 25 is made equal to the inner shape of recess 25 of high rigidity sheet 21, and the thickness of elastic sheet 24 disposed in recess 25 is made substantially equal to the depth of recess 25, so that high rigidity sheet 21 and elastic sheet 24 are disposed without a gap.

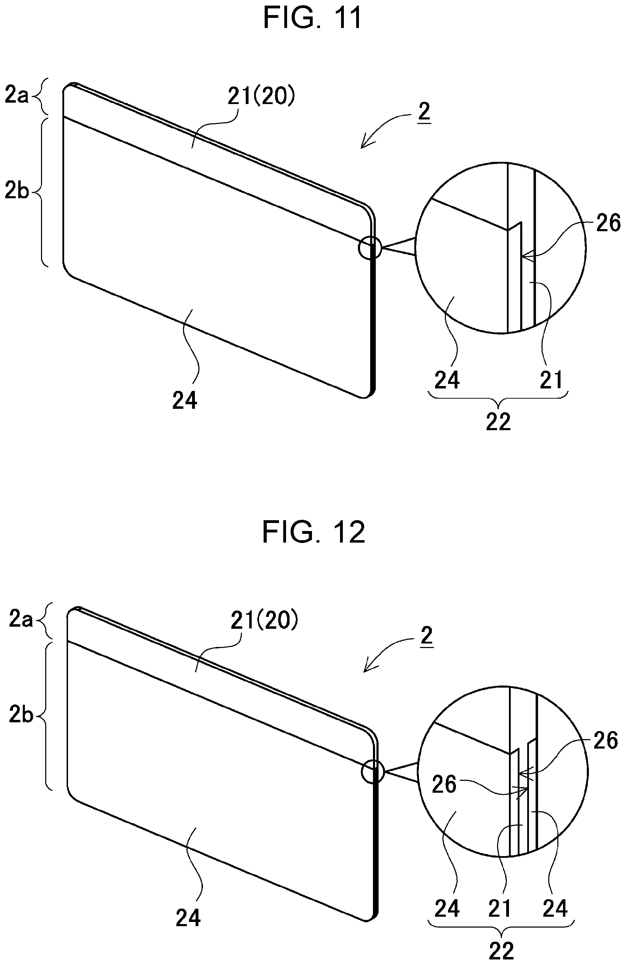

Further, in separator 2 illustrated in the perspective view of FIG. 11 and the perspective view of FIG. 12, upper edge part 2a has high rigidity, and a region other than upper edge part 2a and below the upper edge part is defined as internal region 2b, and internal region 2b has low rigidity. In separator illustrated in the drawing, high rigidity sheet 21 which is hybrid material 20 is disposed at upper edge part 2a, and internal region 2b below upper edge part 2a is defined as a laminated sheet of hybrid material 20 and elastic sheet 24.

In separator 2 illustrated in FIG. 11, on one face of high rigidity sheet 21 which is hybrid material 20, part below an upper edge part is cut into a step shape to provide step recess 26, and elastic sheet 24 is disposed in step recess 26 to form low rigidity sheet 22 having a two-layer structure. The opposite face is a face that contacts the corresponding battery cell as a smooth surface of high rigidity sheet 21. Further, in separator 2 illustrated in FIG. 12, on both faces of high rigidity sheet 21, part below upper edge part 2a is cut into a step shape to provide step recess 26, and elastic sheet 24 is disposed in step recess 25 to form low rigidity sheet 22 having a three-layer structure.

Separator 2 having the structure described above also has a structure in which internal region 2b has low rigidity so as to be capable of absorbing deformation due to expansion of the opposed battery cells, and upper edge part 2a has high rigidity so as to suppress deformation of the upper edge part of the battery cells.

The elastic sheet 24 is a non-foamed rubber elastic body, foamed rubber, or thermoplastic elastomer. In elastic sheet 24, the rubber compressed in the laminated region is pushed out to the non-laminated region due to the incompressibility in which the volume hardly changes by being compressed, and the change in shape and pressure is alleviated at the boundary part between the laminated region and the non-laminated region. As elastic sheet 24, a synthetic rubber sheet is suitable. As the synthetic rubber sheet, any of isoprene rubber, styrene butadiene rubber, butadiene rubber, chloroprene rubber, nitrile rubber, polyisobutylene rubber, ethylene propylene rubber, ethylene vinyl acetate copolymer rubber, chlorosulfonated polyethylene rubber, acrylic rubber, fluororubber, epichlorohydrin rubber, urethane rubber, silicone rubber, thermoplastic olefin rubber, ethylene propylene diene rubber, butyl rubber, and polyether rubber can be used singly or in a laminate of a plurality of synthetic rubber sheets. In particular, the ethylene propylene rubber, the ethylene vinyl acetate copolymer rubber, the chlorosulfonated polyethylene rubber, the acrylic rubber, the fluororubber, and the silicone rubber have excellent heat insulation characteristics, and thus it is possible to realize higher safety by lengthening the time until thermal runaway and thermal melting. When rubber elastic sheet 6 is made of urethane rubber, it is particularly preferable to use thermoplastic polyurethane rubber or foamed polyurethane rubber.

Furthermore, as the thermoplastic elastomer, a thermoplastic polyester, a thermoplastic polyether, and the like are suitable.

In separator 2 of FIG. 6, rubber elastic sheet 21 is not laminated on the entire surface of high rigidity sheet 24A. Separator 2 absorbs expansion of internal region 2b of battery cell 1 by laminating rubber elastic sheet 24A in a region excluding the outer peripheral edge part of battery cell 1. Separator 2 can efficiently absorb expansion of battery cell 1 by laminating rubber elastic sheet 24A over a wide area in internal region 2b of battery cell 1.

In the separator, instead of the rubber elastic sheet, a high-rigidity frame-shaped rubber elastic sheet having a high Young's modulus can be laminated on the outer peripheral edge part, and a rubber elastic sheet having a low Young's modulus can be laminated on the inner side of the frame-shaped rubber elastic sheet. Here, polypropylene, polycarbonate, polybutylene terephthalate, or the like can also be used as a resin having a high Young's modulus in addition to the high-rigidity frame-shaped elastic sheet having a high Young's modulus. The high rigidity rubber elastic sheet has a higher Young's modulus than the low rigidity rubber elastic sheet, and suppresses deformation of the upper edge part of the battery cell. As the frame-shaped rubber elastic sheet, a sheet having a high Young's modulus that hardly deforms when the internal pressure of the battery cell increases is preferably used.

When a separator is formed by combining an elastic sheet having high rigidity and an elastic sheet having low rigidity, there is a method of bonding the sheets using an adhesive, a tape, or the like, or a method of combining two sheets by two-color molding.

The separator is stacked at a fixed position of the battery cell with an adhesive layer or a bonding layer interposed therebetween. Separator 2 can also be disposed at a fixed position of a battery holder (not shown) in which battery cells 1 are disposed at fixed positions in a fitting structure.

In power supply device 100 described above, a prismatic battery cell having a charge capacity of 6 Ah to 80 Ah inclusive of battery cell 1 is used, and hybrid material 20 of separator 2 is "NASBIS (registered trademark) manufactured by Panasonic Corporation" which is a hybrid material of a silica aerogel and a fibrous reinforcing material, so that specific battery cell 1 can be forcibly caused to perform thermal runaway to prevent induction of thermal runaway to adjacent battery cell 1.

The power supply device described above can be used as an automotive power supply that supplies electric power to a motor used to drive an electric vehicle. An electric vehicle incorporating the power supply device may be an electric vehicle such as a hybrid car or a plug-in hybrid car that is driven by an engine and a motor, or an electric car that is driven only by a motor. The power supply device can be used as a power supply for any of these vehicles. Power supply device 100 having high capacity and high output to acquire electric power for driving the vehicle will be described below, for example. Power supply device 100 includes a large number of the above-described power supply devices connected in series or parallel, as well as a necessary controlling circuit.

### (Power supply device for hybrid vehicle)

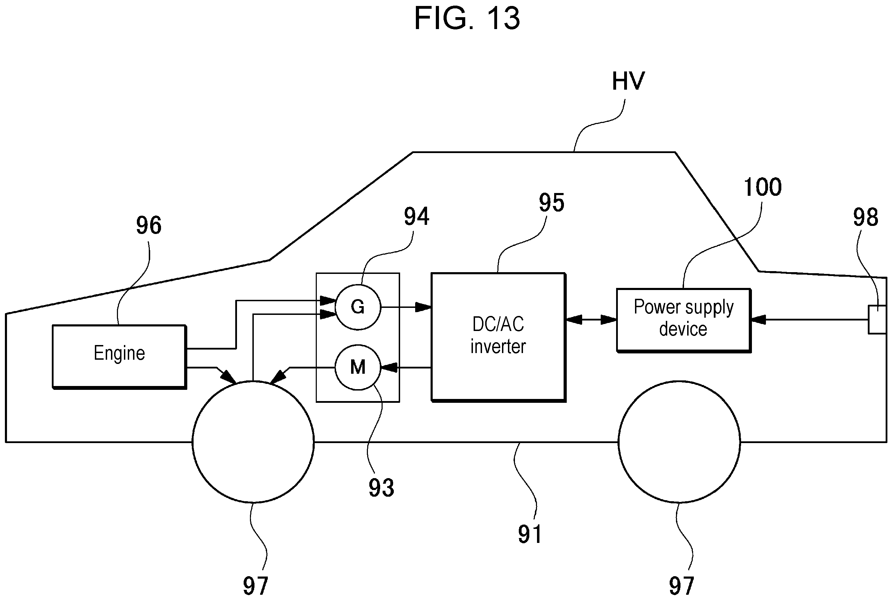

FIG. 13 illustrates an example of a power supply device incorporated in a hybrid car that is driven by both an engine and a motor. Vehicle HV incorporating the power supply device illustrated in this figure includes vehicle body 91, engine 96 and traction motor 93 to let vehicle body 91 travel, wheels 97 that are driven by engine 96 and traction motor 93, power supply device 100 to supply motor 93 with electric power, and power generator 94 to charge batteries included in power supply device 100. Power supply device 100 is connected to motor 93 and generator 94 via DC/AC inverter 95. Vehicle HV travels by both motor 93 and engine 96 while charging and discharging the battery of power supply device 100. Motor 93 is driven when the engine efficiency is low, for example, during acceleration or low-speed travel, and makes the vehicle travel. Motor 93 runs on electric power supplied from power supply device 100. Generator 94 is driven by engine 96 or by regenerative braking when the vehicle is braked to charge the battery of power supply device 100. As illustrated in FIG. 13, vehicle HV may be provided with charging plug 98 for charging power supply device 100. With charging plug 98 connected to an external power source, power supply device 100 can be charged.

### (Power supply device for electric car)

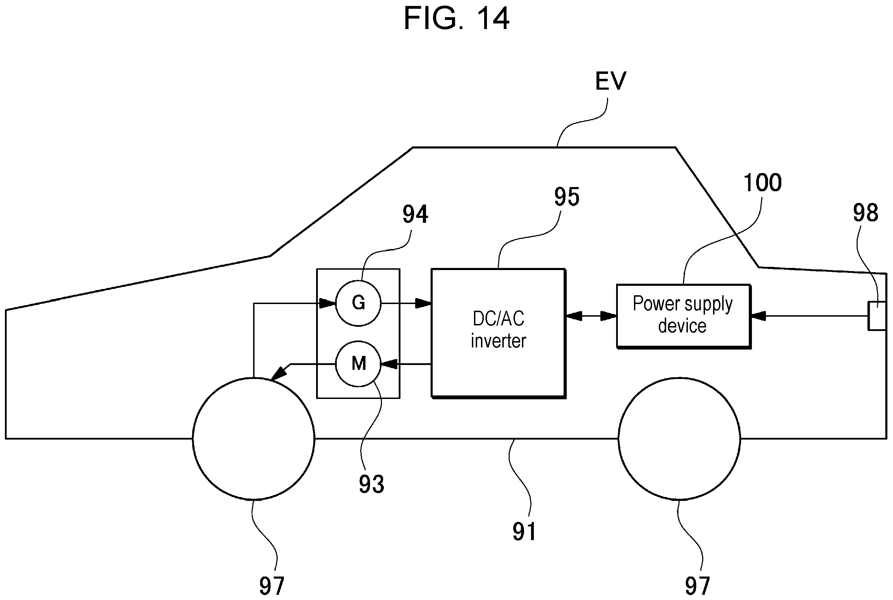

Further, FIG. 14 illustrates an example in which a power supply device is mounted on an electric car that runs only on a motor. The vehicle EV mounted with the power supply device illustrated in this drawing includes vehicle body 91, traction motor 93 for running vehicle body 91, wheels 97 driven by motor 93, and power supply device 100 that supplies electric power to motor 93, and generator 94 that charges battery of power supply device 100. Power supply device 100 is connected to motor 93 and generator 94 via DC/AC inverter 95. Motor 93 runs on electric power supplied from power supply device 100. Generator 94 is driven by energy when vehicle EV is regeneratively braked, and charges battery of power supply device 100. Vehicle EV includes charging plug 98. With charging plug 98 connected to an external power source, power supply device 100 can be charged.

### (Power supply device for power storage device)

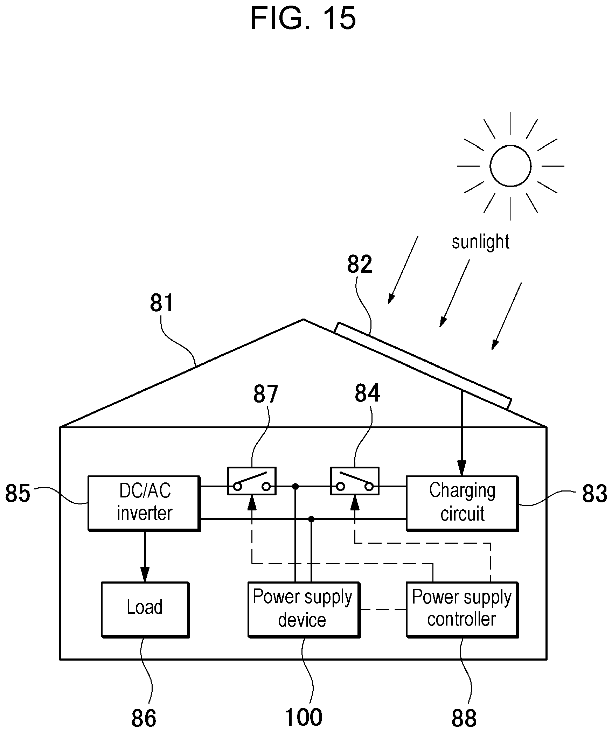

In the present invention, the application of the power supply device is not limited to a power supply to a motor that allows a vehicle to travel. The power supply device according to the exemplary embodiment can be used as a power supply for a power storage device that stores electricity by charging a battery with electric power generated by photovoltaic power generation, wind power generation, or other methods. FIG. 15 illustrates a power storage device that stores electricity by charging batteries in power supply device 100 by solar cell 82.

The power storage device illustrated in FIG. 15 charges the batteries in power supply device 100 with electric power generated by solar cell 82 that is disposed, for example, on a roof or a rooftop of building 81 such as a house or a factory. In this power storage device, the battery of power supply device 100 is charged by charging circuit 83 using solar cells 82 as a charging power source, and then power is supplied to load 86 via DC/AC inverter 85. Therefore, the power storage device has a charge mode and a discharge mode. In the power storage device illustrated in the drawing, DC/AC inverter 85 and charging circuit 83 are connected to power supply device 100 via discharging switch 87 and charging switch 84, respectively. ON/OFF of discharging switch 87 and charging switch 84 is switched by power supply controller 88 of the power storage device. In a charge mode, power supply controller 88 switches charging switch 84 to ON and switches discharging switch 87 to OFF to allow charging from charging circuit 83 to power supply device 100. When charging is completed and the batteries are fully charged or when a capacity of the batteries is charged at a predetermined value or more, power supply controller 88 turns off charging switch 84 and turns on discharging switch 87 to switch to the discharge mode and permits power supply device 100 to discharge electricity into load 86. When needed, the power supply controller is allowed to turn on charging switch 84 and turn on discharging switch 87 to supply electricity to load 86 and charge power supply device 100 simultaneously.

Further, although no illustration is given, the power supply device can be used as a power supply for a power storage device that stores electricity by charging a battery using late-night power at nighttime. The power supply device charged by late-night power can be charged with late-night power, which is surplus power at power plants, and output electric power during the daytime, when the electric power load is high, to restrict peak power consumption at a low level in the daytime. The power supply device can also be used as a power supply that is charged with both output power of a solar cell and late-night power. This power supply device can effectively utilize both electric power generated by a solar cell and late-night power, and can efficiently store power in consideration of weather and power consumption.

The power storage device described above can be suitably used for the following applications: a backup power supply device mountable in a rack of a computer server; a backup power supply device used for radio base stations of cellular phones; a power supply for storage used at home or in a factory; a power storage device combined with a solar cell, such as a power supply for street lights; and a backup power supply for traffic lights or traffic displays for roads.

### INDUSTRIAL APPLICABILITY

The power supply device according to the present invention is suitably used as a large current power supply used for a power supply of a motor for driving an electric vehicle such as a hybrid car, a fuel cell car, an electric car, or an electric motorcycle. Examples of such a power supply device include power supply devices for a plug-in hybrid electric car that can switch between the EV drive mode and the HEV drive mode, a hybrid electric car, an electric car, and the like. The power supply device can also be appropriately used for the following applications: a backup power supply device mountable in a rack of a computer server; a backup power supply device used for radio base stations of cellular phones; a power supply for storage used at home or in a factory; a power storage device combined with a solar cell, such as a power supply for street lights; and a backup power supply for traffic lights.

### REFERENCE MARKS IN THE DRAWINGS

100: power supply device
1: battery cell
2: separator
2A: stack plane
2a: upper edge part
2b: inner region
3: end plate
4: binding bar
10: battery block
11: battery case
11A: facing plane
12: sealing plate
13: electrode terminal
14: safety valve
15: opening
20: hybrid material
21: high rigidity sheet
22: low rigidity sheet
23: through hole
24: elastic sheet
24A: rubber elastic sheet
25: recess
26: step recess
81: building
82: solar cell
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
HV, EV: vehicle

## Claims

1. A power supply device comprising:
a battery block including a plurality of battery cells and separators, the plurality of battery cells being stacked in a thickness with the separators each interposed between a corresponding adjacent pair of the plurality of battery cells;
a pair of end plates disposed on opposing end faces of the battery block; and
a binding bar coupled to the pair of end plates to fix the battery block in a compressed state via the end plates,
wherein each of the battery cells includes a battery case and a sealing plate,
the battery case has a closed bottom,
the sealing plate is airtightly fixed to an opening edge of the battery case, and
wherein each of the separators
includes a stack plane stacked on a plane of the battery case of each of the corresponding adjacent pair of the plurality of battery cells, the stack plane being in contact with the plane of the battery cell, the plane of the battery case facing the stack plane,
the stack plane includes elasticity to deform to absorb expansion of the battery cells caused by an increase in internal pressure,
a Young's modulus of an outer peripheral edge part and an upper edge part of the stack plane is different from a Young's modulus of an internal region located inside the outer peripheral edge part of the stack plane, and
the Young's modulus of the upper edge part is higher than the Young's modulus of the internal region.

2. The power supply device according to claim 1,
wherein each of the separators
includes a hybrid material of an inorganic powder and a fibrous reinforcing material.

3. The power supply device according to claim 2,
wherein the inorganic powder is a silica aerogel.

4. The power supply device according to claim 2 or 3,
wherein each of the separators is one sheet and includes the hybrid material.

5. The power supply device according to claim 4,
wherein the hybrid material includes a packing density of a silica aerogel of the upper edge part higher than a packing density of a silica aerogel of the internal region.

6. The power supply device according to any one of claims 1 to 3,
wherein each of the separators includes a high rigidity sheet and a low rigidity sheet including a Young's modulus smaller than a Young's modulus of the high rigidity sheet,
wherein both the high rigidity sheet and the low rigidity sheet includes a hybrid material of a silica aerogel and a fibrous reinforcing material,
wherein the high rigidity sheet is disposed on the upper edge part, and wherein the low rigidity sheet is disposed in the internal region.

7. The power supply device according to claim 6,
wherein the high rigidity sheet includes a packing density of the silica aerogel higher than a packing density of the silica aerogel of the low rigidity sheet.

8. The power supply device according to claim 6,
wherein the low rigidity sheet includes a laminated sheet of the hybrid material and an elastic sheet.

9. The power supply device according to claim 8,
wherein the elastic sheet is a rubber elastic sheet.

10. The power supply device according to claim 9,
wherein the rubber elastic sheet is a synthetic rubber sheet.

11. The power supply device according to any one of claims 1 to 10, wherein each of the separator includes a thickness between 0.5 mm and 3 mm, inclusive.

12. An electric vehicle including the power supply device according to any one of claims 1 to 10, the electric vehicle comprising:
the power supply device;
a motor for travelling that receives electric power from the power supply device;
a vehicle body that incorporates the power supply device and the motor; and
a wheel that is driven by the motor to cause the vehicle body travel.

13. A power storage device including the power supply device according to any one of claims 1 to 10, the power storage device comprising:
the power supply device; and
a power supply controller configured to control charging and discharging of the power supply device,
wherein the power supply controller enables charging of the secondary battery cells with electric power supplied from an outside and causes the secondary battery cells to charge.
